# EUROPEAN PATENT SPECIFICATION

(11) **EP 2 391 250 B1**
(45) Date of publication and mention of the grant of the patent: **18.01.2023**
(21) Application number: 10735432.6
(22) Date of filing: 29.01.2010
(51) Int. Cl.: A47J 31/42, A47J 42/40, A47J 42/44, A47J 31/36

(54) **ESPRESSO MACHINE WITH GRINDER DOSING CONTROL**
ESPRESSO-MASCHINE MIT MÜHLENDOSIERUNGSSTEUERUNG
MACHINE À CAFÉ EXPRESSO À COMMANDE DE DOSAGE DE MOULAGE

(30) Priority: 29.01.2009 AU 2009900315
(43) Date of publication of application: 07.12.2011
(60) Divisional application: 22207842.0
(73) Proprietor: Breville PTY Limited, Botany, NSW 2019 (AU)
(72) Inventor: PSAROLOGOS, Con, Bardwell Valley, New South Wales 2207 (AU); DAVENPORT, David, Lane Cove, New South Wales 2066 (AU); HOARE, Richard, Lane Cove, New South Wales 2066 (AU)
(74) Representative: Zimmermann, Tankred Klaus
(86) International application number: PCT/AU2010/000087
(87) International publication number: WO 2010/085850

(56) References cited:
- EP-A1- 0 312 901
- EP-A2- 0 245 197
- CH-A5- 660 288
- US-A- 5 615 601
- 'Operating Instructions K30 TWIN Espresso Grinder', [Online] 03 March 2010, Retrieved from the Internet: <URL:http://www.mahlkoeni.delfile/download/ default/id/2428>
- Mahlkönig Gmbh & Co. Kg: "MAHLKÖNIG K30 Operating Instructions", , 31 August 2006 (2006-08-31), XP055335024, Retrieved from the Internet: URL:https://data2.manualslib.com/pdf5/112/ 11146/1114557-mahlkonig/k30_es.pdf?b934e34 1a0ee1fbb2907fb82d661d852&take=binary [retrieved on 2017-01-12]

## Description

### Field of the Invention

The invention relates to espresso machines and more particularly to an espresso machine with a built-in coffee grinder and a number of features that enhance and compliment the operation of that grinder.

### Background of the Invention

The invention provides automation, sophistication and ease of use to consumers seeking an espresso machine with a built-in coffee grinder. It should be understood that the features forming the present disclosure may be used together in or in combination depending on a host of factors such as consumer preference and cost.

EP 0 312 901 A1 discloses a coffee maker comprising an electronic device linked operatively to a timer, a selector operative to dispense one or two doses of the espresso coffee, and a control knob for controlling the amount of water per coffee dose to be dispensed. An electric coffee grinder and a feed pump for feeding water into the boiler are activated by the electronic device to operate for predetermined time periods clocked by the timer.

CH 660 288 A5 teaches an automatic espresso coffee machine with an electric coffee grinder, a machine for preparing the water for the infusion and a filter holder with filters for one or more servings of coffee powder offers a double measure of the amount of coffee powder and/or of the amount of water used to prepare the coffee.

EP 0 245 197 A2 teaches a coffee brewing apparatus comprising a milling assembly producing coffee powder which is filled into a brewing chamber. If it is recognized after several subsequent preparation cycles that too much or too less coffee powder has been filled into the brewing chamber, the operation period of the milling assembly is shortened or extended automatically under the influence of a programmed control unit. A flow rate detector measures the amount of water flowing through the compressed coffee powder and the time required by the water to pass through the coffee powder in the brewing chamber is measured and, if a deviation of the measured time from a reference value is detected, a milling rate is adjusted to produce finer or coarser coffee powder in one of the subsequent preparation cycles.

### Objects and Summary of the Invention

It is an object of the invention to provide an espresso machine with a built-in coffee grinder.

This object is achieved by an espresso machine according to claim 1. Further developments of the invention are defined by the dependent claims.

### Brief Description of the Drawing Figures

In order that the invention be better understood, reference is now made to the following drawing figures in which:
- Figure 1: is a perspective view of an espresso machine according to the teachings of the present invention;
- Figure 2: is an elevation of some of the user controls associated with the machine depicted in Figure 1;
- Figure 3: is a perspective view of a portafilter and cradle;
- Figure 4: is cross sectional detail of the cradle and portafilter;
- Figure 5: is a side elevation of the portafilter inserted into the cradle;
- Figure 6: is a partially cross sectioned top plan view of the portafilter and cradle;
- Figure 7: is a partially cross sectioned top elevation of the cradle and portafilter showing the portafilter depressing an activator;
- Figure 8: is a front perspective view of the portafilter and cradle;
- Figure 9: is a bottom plan view of the cradle;
- Figure 10: is a front elevation of the cradle with the portafilter removed;
- Figure 11: is a perspective view of the grinder, gearbox and chute;
- Figure 12a: is a cross sectional detail of the grinder illustrating the constriction area;
- Figure 12b: is a perspective view of the conical burr grinder casing as integrated with the motor and gearbox casing and illustrating the discharge opening for grinds;
- Figure 12c: is a perspective view of the grinder casing illustrating the flow path of the grinds out of the grinder and through the tapered chute;
- Figure 12d: is an exploded perspective of the removable upper burr and upper burr bracket;
- Figure 13: is a bottom plan view of a hopper;
- Figure 14: is a side elevation of hopper shown in Figure 13;
- Figure 15: is a perspective view of the hopper depicted in Figure 13 with the lid removed;
- Figure 16: is a bottom perspective view of the hopper;
- Figure 17: is a perspective view of the machine's hopper receiving recess;
- Figure 18: is a bottom perspective view of the recess area depicted in Figure 17;
- Figure 19: is a perspective view of a portion of the chassis illustrating the location of the tamper and its receptacle;
- Figure 20: is a cross sectional view of the chassis and removable tamper;
- Figure 21: is an exploded perspective of the drip tray and drip tray cover;
- Figure 22: is a cross section through the drip tray and drip tray cover;
- Figure 23: is a cross sectional view of the drip tray and storage tray, both fully inserted into a stationery carriage associate with the espresso machine;
- Figure 24: is a cross section of the carriage and storage tray with the drip tray removed; and
- Figure 25: is a cross sectional view through perforations in the drip tray.

### Best Mode and Other Embodiments

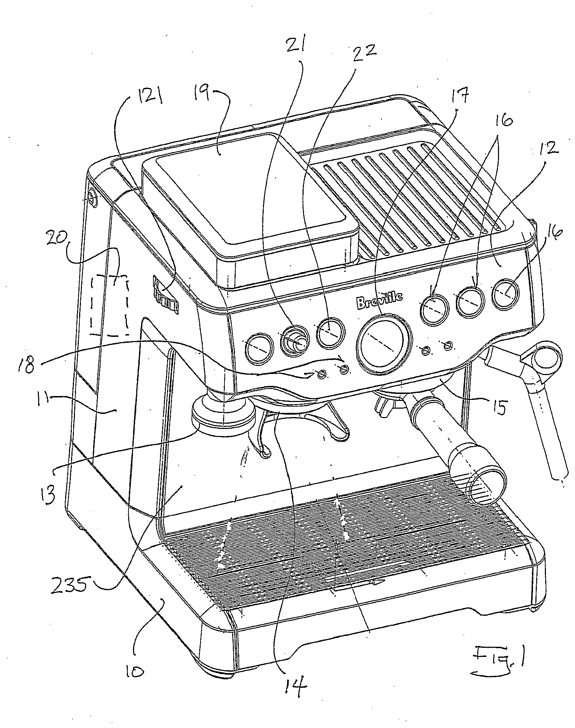

As shown in Figure 1, an espresso machine with built-in coffee grinder comprises a base 10 that supports a carriage within which is contained a drip tray with cover and a concealed storage tray. An upright portion 11 extends from the base 10 and supports a ledge 12. The underside of the ledge features a removable tamper 13, a portafilter support cradle 14 that is located below an internal coffee grinder and the group head or brew head 15. The front face of the ledge comprises various user controls 16, a pressure gauge 17 and various indicators 18. A removable bean hopper 19 discharges beans into the internal grinder. An internal microprocessor 20 receives the various user inputs and operational parameters produced by the machine's internal sensors and using these, controls the operation of the grinder, indicators and the machine's boiler, hot water and steam systems.

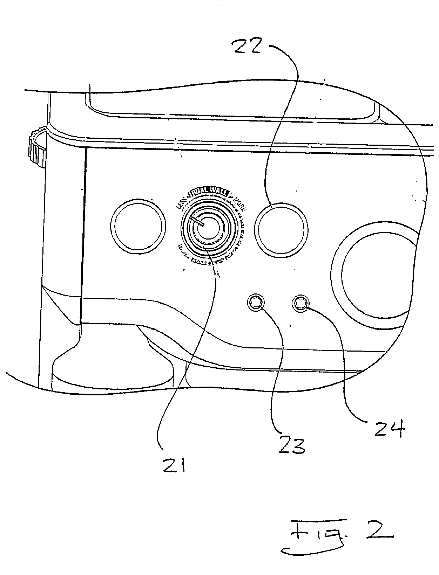

As shown in Figure 2 the user operated grind controls include a variable dose strength adjustment knob 21 and a dose toggle switch 22. The dose strength adjustment knob is in this example a variable resistor with 11 discreet settings. In this example, settings are communicated to a microprocessor that uses the settings to control the operation of the built-in grinder's electrical motor. Each of the discreet or continuous settings determined by the strength adjustment knob 21 corresponds to a duration of operation of the grinder. In effect, less operation time means less grinds and thus weaker coffee and longer operation of the grinder results in more coffee being delivered to the portafilter and thus a stronger brew. It will be appreciated that, for example, a linear resistor may be used in place of a rotary one and digital controls may be employed in more sophisticated examples.

The dose toggle switch 22 toggles between single cup and double cup dose settings. The toggle switch 22 is associated with, for example, two indicators 23, 24. In this example, the indicators 23, 24 are LED indicators that indicate whether a single cup dose 23 or double cup dose 24 has been selected by the user operating the dose toggle switch 22.

The micro processor that is controlled by the dose strength adjustment setting 21 will apply the strength adjustment setting to both the single and double cup dose time settings that are used to control the grinder. Accordingly, operation of the strength adjustment setting 21 while the toggle 22 is set for a single cup dose will result in a comparable dose adjustment being automatically made when the toggle is changed to a double cup dose. Similarly, strength adjustments made when the toggle is set for a double cup are remembered by the microprocessor and applied appropriately to single cup doses. The microprocessor applies an algorithm or get stored values from, for example, a look-up table or the like.

The dose strength adjustment setting 21 is desirable for at least two different reasons. First, normal manufacturing tolerances within the machine's coffee grinding heads result in differences in the outputs of different machines. The dose strength adjustment allows this inconsistency to be rectified with a relatively simple user adjustment. Further, the grind size is determined by, for example, the distance between the burrs and the grinder and because this distance is user adjustable, adjustments in the duration of the operation time of the grinder are required to compensate for the variation in grind size setting. For example, coarser grinds will provide a greater output (by weight) for a given operating time than when set to a finer grind. That is, finer particles take longer to grind. Enough range is provided in the dose strength adjustment 21 to deal with the full range of user selectable grind size settings.

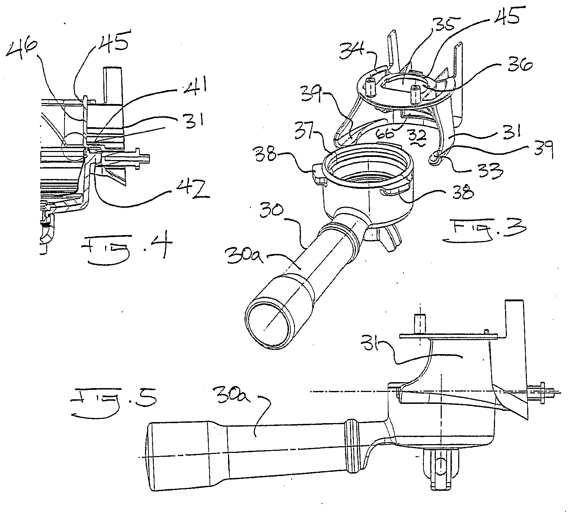

As shown in Figure 3, the portafilter 30 is retained by a filling cradle 31 while fresh grinds from the grinder are being dispensed into it. The cradle 31 comprises a "U" shaped receiving opening 32 flanked by a symmetrical pair of wings 33. An upper surface 34 of the cradle is formed with a dispensing opening 35 that cooperates with a generally "U" shaped guide channel 36 that leads grinds toward the portafilter's filter basket (not shown in Figure 3). The portafilter 30 has circular upper periphery 37 for receiving the filter basket. The upper periphery 37 is surrounded by, for example, three equally spaced tabs 38. The tabs 38 are used to engage the portafilter with the brew head during brewing operations. The brew head has helical slots that receive the tabs and which promote sealing of the filter basket against the underside of the group head when the portafilter is rotated into its final or brewing position.

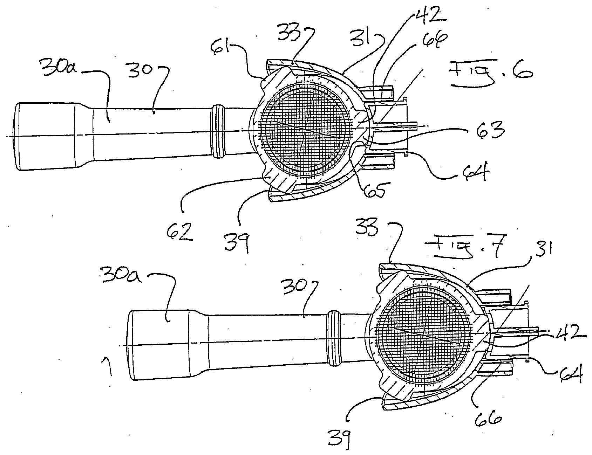

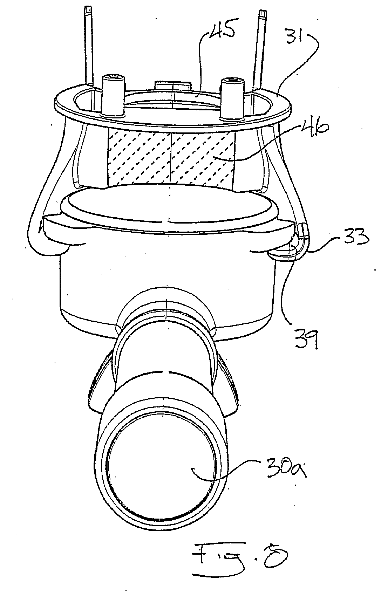

The tabs 38 are also used to support the portafilter in a hands free manner while ground coffee is being dispensed into it. As shown in Figures 4-8, the rear tabs, being the ones closest to the portafilter's handle are supported by tapered ledges 39 that extend from the lower extremity of the wings 33. The ledges 39 taper from a maximum width toward the front of the cradle to a minimum width at the rear or deepest part of the cradle opening 32. As shown in Figure 6, the two rear tabs 61, 62 are at least partially if not fully supported by the ledge 39 when the portafilter is inserted into the cradle 31. In this orientation, the front tab 63 is adjacent to a reciprocating actuator 64 that cooperates with an electrical switch such as a microswitch. The actuator 64 has a curved front surface 65 that cooperates with the front tab 63. The actuator 64 fits within and slides relative to an opening 66 formed in the cradle between the wings 31. As shown in Figure 7, the portafilter 30 may be advanced against the actuator 64 so that the actuator's switch can be operated in this way.

In accordance with the invention, advancing the portafilter 30 against the actuator 64 (momentarily) and then releasing it sends a signal to the microprocessor that causes an automatic filling of the filter basket by actuating the grinder for a specified or preset time. This time depends on the setting of the dose strength adjustment setting 21 and the dose toggle switch 22. Pressing the front tab 64 of the portafilter against the actuator 64 and holding it continuously in the position depicted in Figure 7 causes the microprocessor to operate the grinder until pressure on the actuator 64 is released manually or a predetermined operating time for the grinder is reached.

The rear tabs 61, 62 of the portafilter, when resting on the ledges 39 of the wings 31 act as a pivot point. The weight of the portafilter's handle 30a causes an imbalance that is resisted by an internal downward facing ledge 41 formed above the front tab 42 when it is inserted into the cradle 31. In this way, the imbalance caused by the weight of the handle is resisted and the portafilter remains stable in the cradle, even when the user is not holding it in place.

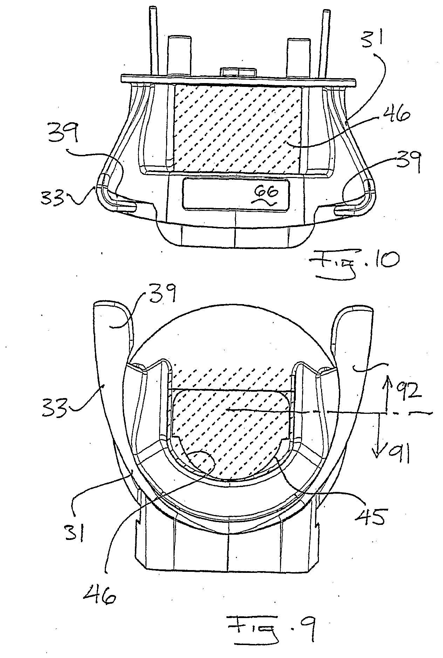

As shown in Figures 3 and 9, the dispensing opening 35 of the cradle includes an arcuate or curved rim portion 45. This curved portion of the opening 35 is located toward the front of the filter basket when the portafilter is inserted into the cradle. The curved portion 45 of the opening 35 cooperates with the curved guide channel 46 so that grounds are deposited toward the front half 91 of the filter basket rather than the rear half 92. These features contribute to the stability of the mound formed by the dispensed grinds, making spilling less likely.

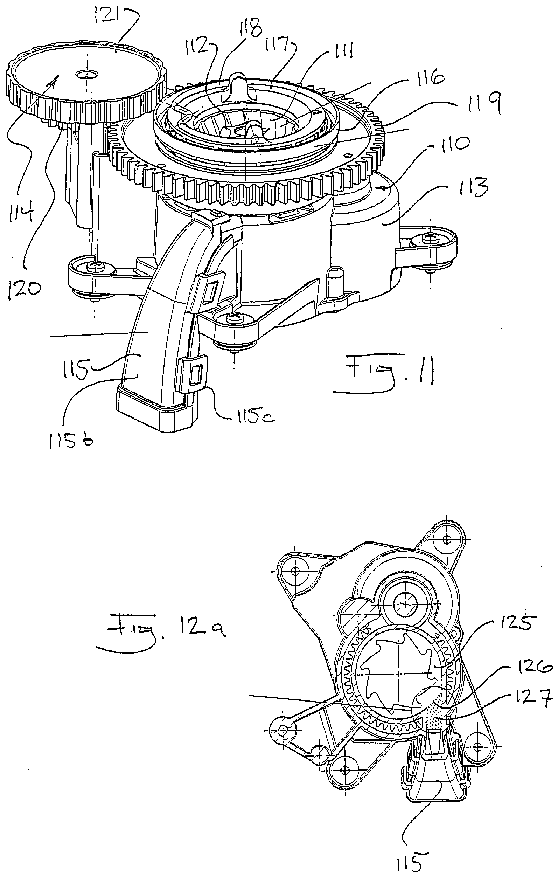

As shown in Figure 11, the espresso machine contains an internal coffee grinder 110. The grinder 110 comprises an upper burr 111, a lower burr 112, a motor and gearbox case arrangement 113, a user grind size adjustment mechanism and a dispensing chute 115. In this example, a conical burr grinder is used. Thus, the lower burr 112 is rotated by the motor and its gearbox with respect to the stationery upper burr head 111. The upper burr head 111 is removably retained by an upper burr bracket 116. The upper burr bracket 16 locates the removable upper burr head in a predictable and repeatable way relative to the fixed lower burr head 112. The upper burr head 111 is retained in the upper burr bracket 116 by a retaining ring 117 that carries a folding grip 118 that can be deployed and twisted so as to free the ring 117 from the bracket 116 allowing the upper burr head to be removed, maintained or replaced. The entire upper burr bracket may be rotated and thus displaced from the lower burr by a first adjustment gear ring 119. This gear ring 119 is rotated by a smaller or second adjustment gear 120 carried on the underside of a user adjustment dial 121. The user adjustment dial and its second gear 120 are supported for rotation by the housing of the motor and gearbox. Thus, rotation of the adjustment dial 121 causes a linear displacement of the upper burr bracket and hence the upper burr 111. The closer the upper burr head 111 is to the lower burr head 120, the finer the grinds that are created. As shown in Figure 12a, the receiving cavity 125 located below the burrs of the grinder features an exit opening 126. This exit opening 126 leads into a constriction area 127 that extends between the discharge opening 126 and the opening into the dispensing chute 115. In some embodiments, the constriction area 127 has parallel side walls that are configured to gently compress rather than disperse the grind particles. This light compression of the particles reduces the velocity and volume of the discharge and reduces the accumulation of static electricity in the particles and their interaction with the polymeric chute 115. Thus, grinds are discharged in a more compressed or compact way into the filter basket of the portafilter. This minimises the amount of spillage from the filter basket.

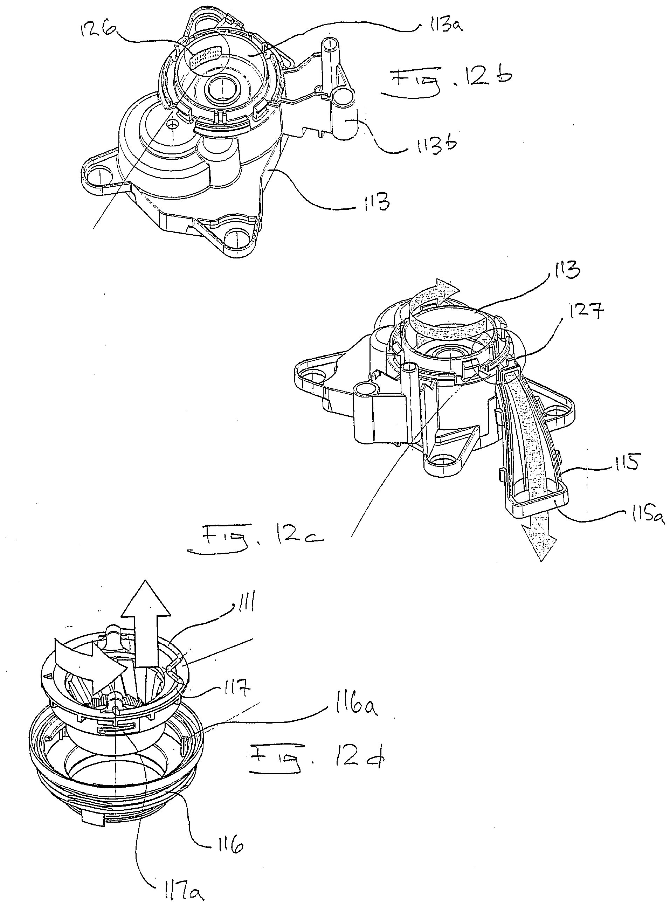

As shown in Figure 12b, the motor, gearbox and part of the conical burr grinding assembly are contained within a unitary case 113. An upper portion of that case contains a recess 113a for receiving the lower burr 112. A discharge or exit opening 126 is formed into a side wall of the recess 113a. The case 113 also contains journal support structures 113b for supporting the user adjustment dial 121 and any gear train associated with it.

As shown in Figure 12c, the ground coffee particles circulate within the casing 113 until such time as they enter the constriction area 127 prior to discharge from the tapered chute 115. Note that chute 115 terminates in a generally "D" shaped port 115a that cooperates with the configuration and shape of the dispensing opening 35 formed in the filling cradle 31 (see Figure 3). With reference to Figure 11, it can also be appreciated that the chute 115 is provided with a removable cover 115b that is attached by clips 115c, allowing the interior of the chute to be accessed for cleaning or maintenance.

As shown in Figure 12d, the upper burr head 111 is removably retained by the upper burr bracket 116. In this example, the bracket 116 contains male internal bayonet features 166a that cooperate with female bayonet features 117a formed around the external circumference of the upper burr head 111. This allows for a positive mechanical engagement that is repeatable and predictable, facilitating the removal and reinsertion of the upper burr head 111 into its burr bracket 116.

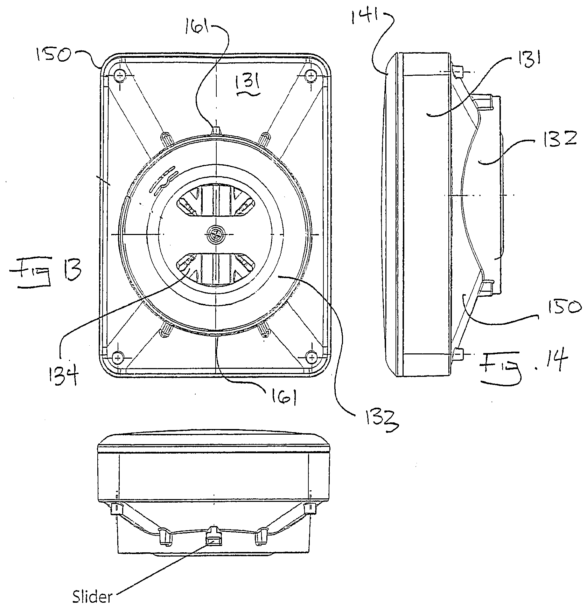

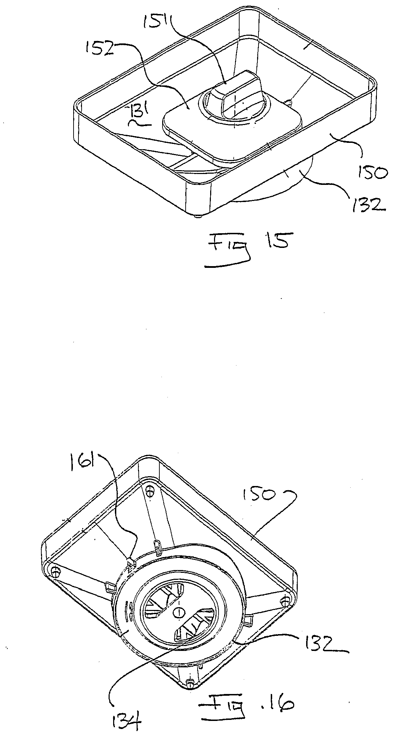

As shown in Figures 13-16, the espresso machines internal grinder is supplied with coffee beans from a removable, external hopper 150. The hopper 115 comprises a bean reservoir 131, a coupling portion 132, a coupling mechanism and an optional transparent cover 141.

In this example, the coupling portion 132 is generally cylindrical and fits within a cooperating opening formed on an upper portion of an espresso machine. The receiving opening for the coupling portion 32 includes a pair of recesses for receiving reciprocating sliders 161 that extend radially from the cylindrical side walls of the coupling portion 132. As shown in Figure 13, the underside 133 of the coupling portion 132 has one or more discharge openings 134 that can be blocked by a rotating shutter. The shutter is operated by a dial 151 that extends through a cover 152 within the reservoir 131. Rotating the dial 151 closes the shutter and simultaneously causes the safety sliders 162 to retract into the coupling portion 132. Retraction of the sliders 161 from the cooperating openings in the receiving portion of the espresso machine allows the hopper to be withdrawn, the shutter having already been closed to prevent beans from being inadvertently discharged. Retraction of the sliders from their cooperating openings in the espresso machine also deactivates an electrical switch associated with one or both receiving openings which has the effect of de-energising or locking out the power supply to the grinder's motor, thus rendering the grinder inoperative until such time as the hopper is reinstalled and the dial is twisted. Installation of the hopper by twisting the dial causes the sliders to extend and thus rendered the grinder's motor operative. This arrangement is a safety feature that prevents the grinder's motor from being operated unless the hopper is securely in place.

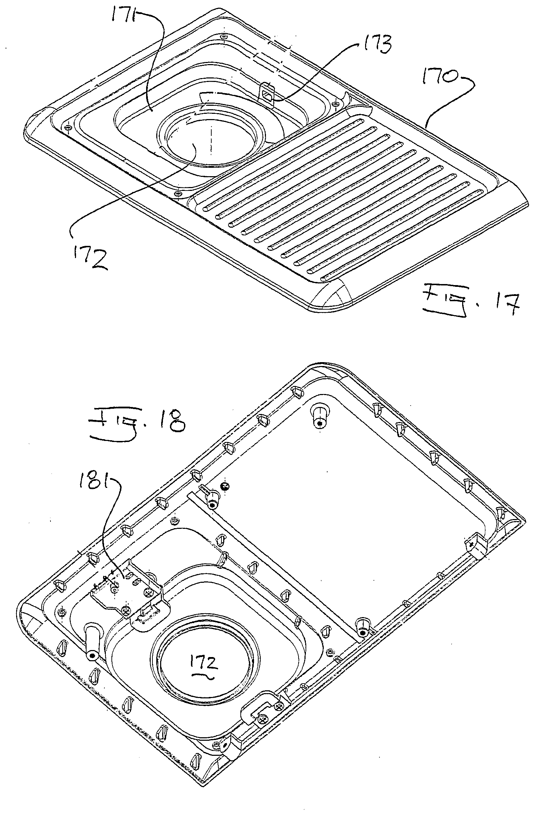

As shown in Figures 17 and 18, an upper portion of the espresso machine features, for example, a top cover 170 having a recess 171 for receiving the body of the hopper and opening 172 for receiving the coupling portion of the hopper. The recess 71 features a pair of openings or sleeves 173 for receiving the sliders. As shown in Figure 18, a microswitch 181 is mounted under the cover, adjacent to one or both of the receiving openings 173. The microswitch 181 cooperates with the espresso machines micro processor for the purpose of disabling the grinder's motor once the sliders are retracted.

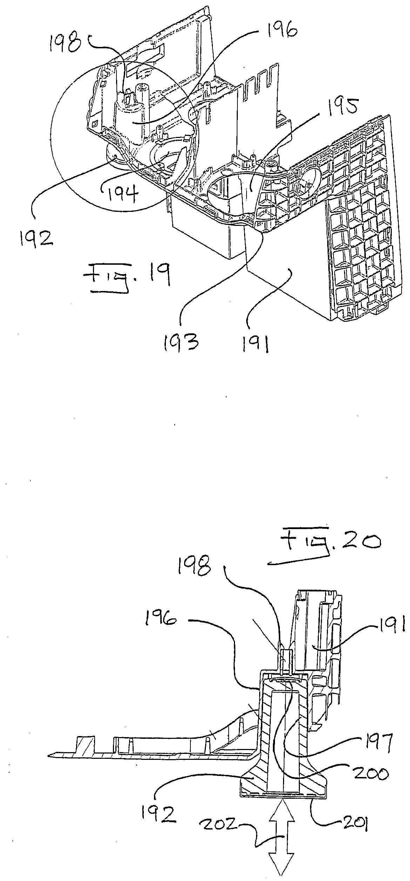

As shown in Figures 19 and 20, the chassis 191 of the espresso machine supports a removable coffee tamper 192. In this example, the chassis 191 includes a frontal overhanging ledge 193. The ledge 193 has openings 194,195 for receiving relevant portions of the machine's grinder and group head. The underside of the ledge 193 also features a tapered recess 196 for receiving a removable tamper 192. The tamper 192 has an elongated handle 197 that is tapered to cooperate snugly with the receiving recess 196. A magnet 198 is located in association with the recess 196 and preferably on or adjacent to the uppermost extremity of the recess 196. The coffee tamper 192 features a metallic cap 200 that is attracted by the magnet and assists in retaining the tamper within the recess 196. The tamper 192 has an enlarged head 201 that is used to compress ground coffee into the filter basket. It can be used in the orientation depicted in Figures 19 and 20, that is, inserted into the recess. In the alternative, it can be removed and reinserted 202, at will, by the user. In preferred embodiments, the tamper and its recess are located conveniently adjacent to the coffee grinds dispenser, as indicated by the relationship between the recess 196 and the opening in the chassis for the grinder 194 shown in Figure 19.

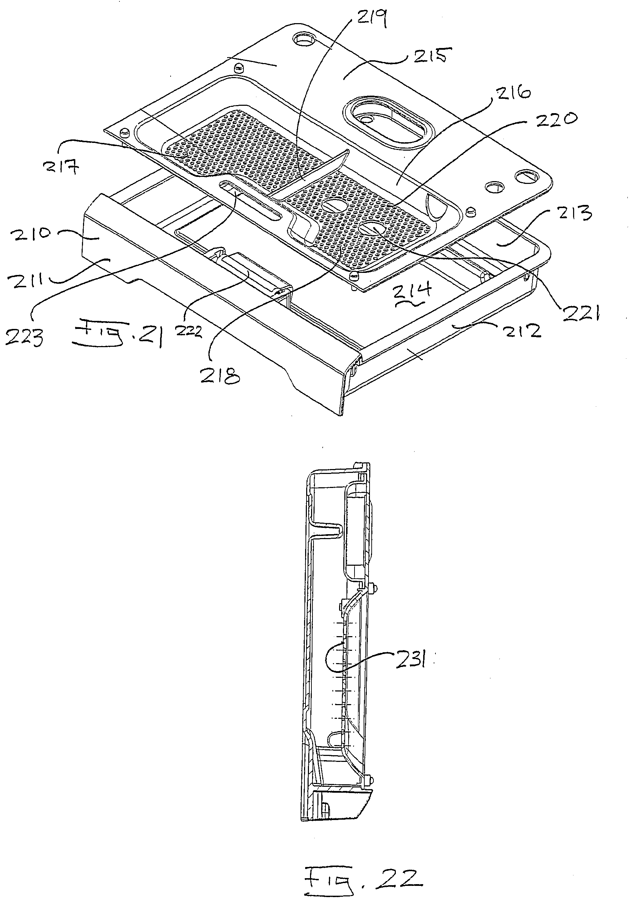

The espresso machine also supports a removable drip tray and drip tray cover as shown in Figures 21 - 23. The cover may be located under a grille (not shown). As shown in Figure 21, the drip tray 210 comprises a facia 211, side walls 212 and a rear wall 213 that define a liquid receptacle 214. The receptacle 214 has a cooperating drip tray cover 215. The cover 215 has a depressed area 216, the floor of which is perforated 217. The perforations are preferably tapered, having a larger diameter at the undersurface 231 and smaller diameter at the upper surface 218 of the drip tray cover. The perforations are adapted to trap coffee grinds above the tray, not letting an excessive amount of grinds into the receptacle 214. Thus, liquids trapped in the receptacle 214 can be disposed of in a kitchen sink without discharging an excessive amount of grinds into the sink. The depressed area 216 is subdivided by a barrier or wall 219. Waste grinds associated with the coffee grinder and tamper generally fall to the left of the wall 19 because the grinder and tamper are located to the left of and above this wall. The brew head is located to the right of and above the wall 219 (see Figure 1). Thus, the perforated floor 220 on the right hand side of the wall 219 features one or more larger openings 221 that allowed brewed coffee waste to more easily flow into the receptacle 214. The tray also features a receptacle level indicator 222 that can be read through an opening 223 formed in the cover, in registry with the indicator 222.

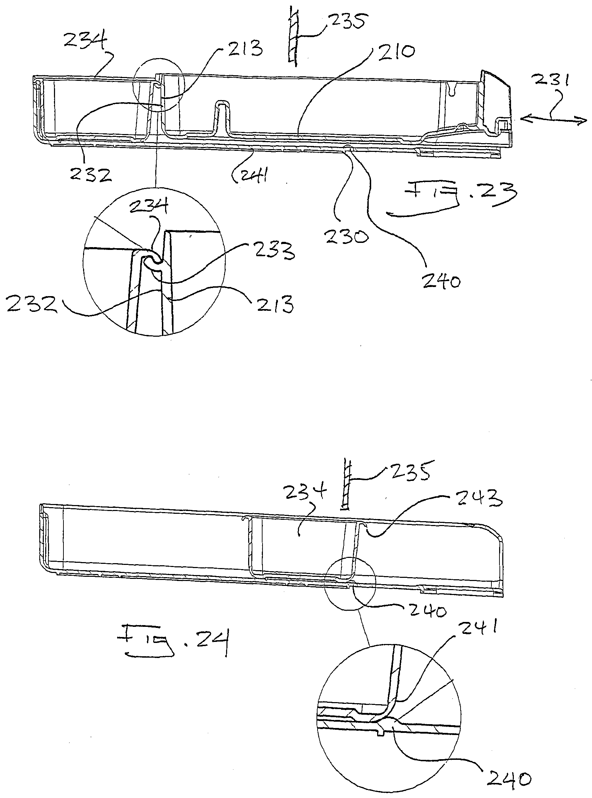

As shown in Figure 23 the drip tray 210 slides into and out of a receiving carriage 230 that is fixed with respect to the espresso machine and preferably located at a lowermost portion or base 10 of the espresso machine. The drip tray 210 is adapted for reciprocal motion 231 relative to the carriage 230. As shown in Figure 23, the rear wall 213 of the drip tray has a rear surface 232 from which extends a hook feature or upturned lip 233. The upturned lip 233 is adapted to receiving a hook feature or cooperating downturned lip 234 formed on an exterior of a side wall of a storage tray 234. The storage tray 234 is also adapted for reciprocal sliding motion within the stationery carriage 230. As shown in Figure 23, both the storage tray 234 and the drip tray 210 are fully inserted into the carriage 230. In this orientation, the perforated portion of the drip tray is generally exterior to an adjacent external front surface 235 of the espresso machine. Thus, the storage tray 234 and the rear of the drip tray are concealed behind the front surface 235. In this orientation, the depressed, perforated area of the drip tray cover (see Figure 21) is external to the before mentioned surface 235, but the remainder of the drip tray and its cover, together with the storage tray 234 are effectively concealed within the espresso machine.

A one or more small bumps, protrusions or raised lip 240 is formed into the upper surface of the floor 241 of the carriage 230. The protrusion 240 is external to the front surface 235 of the espresso machine. During its reciprocal motion 231, the underside of the drip tray does not contact the protrusion 240 however, because the drip tray and the storage tray are interconnected by the hook-like features 233, 234, the storage tray will be carried forward with the drip tray when the drip tray is removed from the machine. As shown in Figure 24, the storage tray 234 will eventually be carried forward by the drip tray (not shown) until a forward lower edge 241 of the storage tray contacts the protrusion 240. This will cause the front of the storage tray 234 to rise or lift relative to the upturned lip 233 of the drip tray. Thus, upon contract with the protrusion 240, the storage tray becomes disconnected or decoupled from the drip tray at approximately the time that its front edge 243 protrudes externally of the adjacent front surface 235 of the espresso machine. This makes full removal of the concealable storage tray by the user easy. Repositioning of the storage tray into the carriage and urging it toward the rear of the carriage using the drip tray causes the hook-like features 233, 234 to engage thus establishing a coupling between the drip tray and the storage tray that is required for subsequent removal of the storage tray.

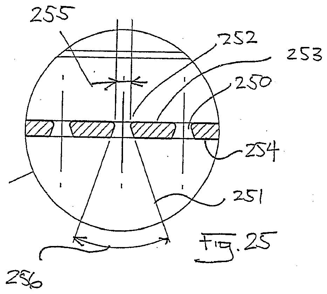

Figure 25 illustrates a cross sectional detail of the perforations found on the drip tray cover 215, particularly in the depressed area 216 provided in the example depicted in Figures 21 - 23. As shown in Figure 25 the circular perforations 250 are tapered 251 having the smaller diameter 252 on the upper surface 253 and the larger diameter on the lower surface 254. In this example, the hole diameter 255 at the upper surface is about 2.2mm. The rim of the upper opening may be radiused. As illustrated in this example, the taper is a downward opening taper of approximately 20 degrees 256. While the present invention has been disclosed with reference to particular details of construction, these should be understood as having been provided by way of example and not as limitations to the scope of the appended claims.

## Claims

1. An espresso machine with a built in coffee grinder (110), the machine comprising:
a filling cradle (31) for holding a portafilter (30) having a circular upper periphery (37), the cradle (31) comprising a generally U shaped opening (32, 66) and a downward facing ledge (41) formed adjacent the cradle (31) that engages a front tab (42, 63) of three equally spaced tabs (38, 42, 61, 62, 63) of the portafilter (30) for receiving the portafilter (30) in a hands free manner by resisting imbalance pivoting of the portafilter (30) when supported by the cradle (31), wherein an upper surface (34) of the cradle (31) is formed with a dispensing opening (35) cooperating with a generally U shaped guide channel (36) that is configured to lead grinds toward a filter basket of the portafilter (30), the cradle (31) further comprising a symmetrical pair of wings (33) flanking the U shaped opening (32, 66), with each wing (33) having a tapered ledge (39) extending from a lower extremity of each wing (33) that engages a rear tab (38, 61, 62) of the three equally spaced tabs (38, 42, 61, 62, 63) of the portafilter (30) for supporting the portafilter (30) when the portafilter (30) is inserted into the cradle (31), wherein the tapered ledges (39) taper from a maximum width toward the front of the cradle (31) to a minimum width at a rear of the cradle opening (32);
an opening (66) formed in the cradle (31) between the wings (33);
a brew head (15) with helical slots that receive the tabs (38) during brewing operations;
an actuator (64) having a curved front surface (65) is located adjacent to the cradle within the opening (66) and adapted to slide relative to the opening (66) for co-operating with the portafilter (30) when the portafilter (30) is in the cradle (31); and
wherein the front tab (42, 63) of the portafilter (30) and the actuator (64) are adapted to, when the portafilter (30) is supported by the cradle (31) and advanced toward the actuator (64), operate an electrical switch, the actuator (64) thereby causing a signal to be sent to a microprocessor when it is activated by the portafilter (30) causing coffee grounds to be dispensed into the portafilter (30).

2. The espresso machine of claim 1, wherein:
the signal causes the grinder (110) to operate for a predetermined time.

3. The espresso machine of claim 1, wherein:
the cradle (31) has the dispensing opening (35) located toward a front of a filter basket of the portafilter (30), the opening (35) causing grounds to be deposited toward a front half of the filter basket, thus contributing to the stability of a mound formed by the grounds.

## Patentansprüche

1. Eine Espressomaschine mit einer eingebauten Kaffeemühle (110), wobei die Maschine folgende Merkmale aufweist:
ein Füllgestell (31) zum Halten eines Siebträgers (30) mit einem kreisförmigen oberen Umfang (37), wobei das Gestell (31) eine im Allgemeinen U-förmige Öffnung (32, 66) und eine nach unten zeigende Leiste (41) aufweist, die benachbart zu dem Gestell (31) gebildet ist, die einen vorderen Vorsprung (42, 63) von drei gleichmäßig beabstandeten Vorsprüngen (38, 42, 61, 62, 63) des Siebträgers (30) in Eingriff nimmt, zum Aufnehmen des Siebträgers (30) in freihändiger Weise durch Widerstehen von Ungleichgewichtsschwenken des Siebträgers (30), wenn dieser durch das Gestell (31) getragen wird, wobei eine obere Oberfläche (34) des Gestells (31) mit einer Abgabeöffnung (35) gebildet ist, die mit einem im Allgemeinen U-förmigen Führungskanal (36) zusammenwirkt, der dazu ausgebildet ist, Mahlgut in Richtung eines Filterkorbs des Siebträgers (30) zu führen, wobei das Gestell (31) ferner ein symmetrisches Paar von Flügeln (33) aufweist, die die U-förmige Öffnung (32, 66) flankieren, wobei jeder Flügel (33) eine spitz zulaufende Leiste (39) aufweist, die sich von einem unteren Ende jedes Flügels (33) erstreckt, die einen hinteren Vorsprung (38, 61, 62) der drei gleichmäßig beabstandeten Vorsprünge (38, 42, 61, 62, 63) des Siebträgers (30) zum Tragen des Siebträgers (30) in Eingriff nimmt, wenn der Siebträger (30) in das Gestell (31) eingeführt ist, wobei die spitz zulaufenden Leisten (39) von einer maximalen Breite in Richtung der Vorderseite des Gestells (31) zu einer minimalen Breite an einer Rückseite der Gestellöffnung (32) spitz zulaufen;
eine Öffnung (66), die in dem Gestell (31) zwischen den Flügeln (33) gebildet ist;
einen Brühkopf (15) mit spiralförmigen Schlitzen, die die Vorsprünge (38) während Brühvorgängen aufnehmen;
ein Betätigungselement (64) mit einer gekrümmten Vorderoberfläche (65) befindet sich benachbart zu dem Gestell innerhalb der Öffnung (66) und ist dazu angepasst, zum Zusammenwirken mit dem Siebträger (30) relativ zu der Öffnung (66) zu gleiten, wenn sich der Siebträger (30) in dem Gestell (31) befindet; und
wobei der vordere Vorsprung (42, 63) des Siebträgers (30) und das Betätigungselement (64) dazu angepasst sind, wenn der Siebträger (30) durch das Gestell (31) getragen wird und in Richtung des Betätigungselements (64) fortbewegt wird, einen elektrischen Schalter zu betätigen, wobei das Betätigungselement (64) dadurch bewirkt, dass ein Signal an einen Mikroprozessor gesendet wird, wenn dieses dadurch aktiviert wird, dass der Siebträger (30) bewirkt, dass Kaffeemahlgut in den Siebträger (30) abgegeben wird.

2. Die Espressomaschine gemäß Anspruch 1, bei der:
das Signal bewirkt, dass die Mühle (110) eine vorbestimmte Zeit lang arbeitet.

3. Die Espressomaschine gemäß Anspruch 1, bei der:
das Gestell (31) die Abgabeöffnung (35) aufweist, die in Richtung einer Vorderseite eines Filterkorbs des Siebträgers (30) angeordnet ist, wobei die Öffnung (35) bewirkt, dass Mahlgut in Richtung einer vorderen Hälfte des Filterkorbs abgelagert wird, was so zu der Stabilität eines Hügels beiträgt, der durch das Mahlgut gebildet wird.

## Revendications

1. Machine à café expresso avec un broyeur à café intégré (110), la machine comprenant:
un berceau de remplissage (31) destiné à maintenir un porte-filtre (30) présentant une périphérie supérieure circulaire (37), le berceau (31) comprenant une ouverture généralement en forme de "U" (32, 66) et un rebord orienté vers le bas (41) formé adjacent au berceau (31) qui vient en prise avec un onglet avant (42, 63) de trois onglet équidistants (38, 42, 61, 62, 63) du porte-filtre (30) pour recevoir le porte-filtre (30) de manière à mains libres en résistant au pivotement par déséquilibre du porte-filtre (30) lorsqu'il est supporté par le berceau (31), où une surface supérieure (34) du berceau (31) est formée avec une ouverture de distribution (35) coopérant avec un canal de guidage généralement en forme de "U" (36) qui est configuré pour conduire la mouture vers un panier à filtre du porte-filtre (30), le berceau (31) comprenant par ailleurs une paire symétrique d'ailes (33) flanquant l'ouverture en forme de "U" (32, 66), chaque aile (33) présentant un rebord effilé (39) s'étendant à partir d'une extrémité inférieure de chaque aile (33) qui vient en prise avec un onglet arrière (38, 61, 62) des trois onglets équidistants (38, 42, 61, 62, 63) du porte-filtre (30) pour supporter le porte-filtre (30) lorsque le porte-filtre (30) est introduit dans le berceau (31), où les rebords effilés (39) s'effilent d'une largeur maximale vers l'avant du berceau (31) à une largeur minimale à une approche de l'ouverture du berceau (32);
une ouverture (66) formée dans le berceau (31) entre les ailes (33);
une tête d'infusion (15) avec des fentes hélicoïdales qui reçoivent les onglets (38) pendant les opérations d'infusion;
un actionneur (64) présentant une surface avant courbe (65) est situé adjacent au berceau dans l'ouverture (66) et est adapté pour coulisser par rapport à l'ouverture (66) pour coopérer avec le porte-filtre (30) lorsque le porte-filtre (30) se trouve dans le berceau (31); et
dans lequel l'onglet avant (42, 63) du porte-filtre (30) et l'actionneur (64) sont adaptés pour actionner, lorsque le porte-filtre (30) est supporté par le berceau (31) et avancé vers l'actionneur (64), un interrupteur électrique, l'actionneur (64) provoquant ainsi l'envoi d'un signal à un microprocesseur lorsqu'il est activé par le porte-filtre (30) provoquant la distribution de mouture de café dans le porte-filtre (30).

2. Machine à café expresso selon la revendication 1, dans laquelle:
le signal fait fonctionner le broyeur (110) pendant un temps prédéterminé.

3. Machine à café expresso selon la revendication 1, dans laquelle:
le berceau (31) présente l'ouverture de distribution (35) située vers l'avant d'un panier à filtre du porte-filtre (30), l'ouverture (35) provoquant le dépôt de mouture vers une moitié avant du panier à filtre, contribuant ainsi à la stabilité d'un tas formé par la mouture.
